(19) Europäisches Patentamt
European Patent Office
Office européen des brevets

(11) **EP 3 764 022 B1**

(12) **EUROPEAN PATENT SPECIFICATION**

(45) Date of publication and mention
of the grant of the patent:
**25.10.2023 Bulletin 2023/43**

(21) Application number: **18908335.5**

(22) Date of filing: **08.03.2018**

(51) International Patent Classification (IPC):
*F24D 17/02* (2006.01)     *F24H 4/04* (2006.01)
*F25B 30/02* (2006.01)     *F25B 49/02* (2006.01)
*F25B 47/02* (2006.01)     *F25B 25/00* (2006.01)

(52) Cooperative Patent Classification (CPC):
**F25B 30/02; F24D 17/02; F24H 4/04; F25B 25/005;**
**F25B 47/02; F25B 49/02;** F25B 2339/047;
F25B 2600/024; F25B 2600/0253; F25B 2700/151;
F25B 2700/1931; F25B 2700/195;
F25B 2700/21152; Y02B 30/70

(86) International application number:
**PCT/JP2018/008985**

(87) International publication number:
**WO 2019/171532 (12.09.2019 Gazette 2019/37)**

(54) **HOT WATER SUPPLY DEVICE**

WARMWASSERVERSORGUNGSVORRICHTUNG

DISPOSITIF D'ALIMENTATION EN EAU CHAUDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**13.01.2021 Bulletin 2021/02**

(73) Proprietor: **Mitsubishi Electric Corporation**
**Tokyo 100-8310 (JP)**

(72) Inventors:
• **MURATA, Kenta**
**Tokyo 100-8310 (JP)**
• **TANAKA, Takahiro**
**Tokyo 100-8310 (JP)**

• **HATANAKA, Kensaku**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
DE-A1-102007 056 461      JP-A- 2005 147 607
JP-A- 2005 147 609        JP-A- 2006 132 888
JP-A- 2006 132 888        JP-A- 2008 281 282
JP-A- 2012 097 953        JP-A- 2017 003 158
JP-A- 2017 198 432        JP-A- 2017 198 432

**Description**

Technical Field

The present invention relates to a hot water supply apparatus that causes a heat pump unit to heat water.

Background Art

A typical hot water supply apparatus including a heat pump includes a heat pump unit and a tank unit. The heat pump unit includes a compressor, a water heat exchanger, a pressure reducing device, and an air heat exchanger. In the heat pump unit, the compressor, the water heat exchanger, the pressure reducing device, and the air heat exchanger are connected in circuit to form a refrigerant circuit through which refrigerant is circulated by driving the compressor.

The tank unit includes a hot water storage tank, a water pump, and a heat exchanger. In the tank unit, the hot water storage tank, the water pump, and the heat exchanger are connected in circuit to form a circulation path through which water is circulated by driving the water pump. In this case, the water heat exchanger in the heat pump unit can also serve as the heat exchanger in the tank unit.

In the hot water supply apparatus, when the compressor in the heat pump unit and the water pump in the tank unit are activated, the water flows out of the hot water storage tank into the circulation path through an outlet located in lower part of the hot water storage tank and then flows into the water heat exchanger. The water flowing through the water heat exchanger exchanges heat with the refrigerant flowing through the water heat exchanger, so that the water is heated. Then, the water is returned to the hot water storage tank through a hot water inlet located in upper part of the hot water storage tank. Consequently, high temperature hot water can be stored in the hot water storage tank of the hot water supply apparatus.

In the hot water supply apparatus, since unheated water flows from the lower part of the hot water storage tank and heated water flows into the upper part of the hot water storage tank, the unheated water in the lower part of the hot water storage tank is mixed with the heated water in the upper part of the hot water storage tank. Consequently, medium temperature water having a temperature ranging from approximately 30 degrees C to approximately 50 degrees C is stored in the hot water storage tank.

The medium temperature water is not suitable for use as a heat source for heating or for reheating bathtub water because its temperature is low. If the heated water is not supplied until hot water is used up, the amount of heat per unit volume will decrease. Furthermore, reheating the medium temperature water using the heat pump unit is inefficient, resulting in lower coefficient of performance (COP) of the hot water supply apparatus.

A recently developed hot water supply apparatus is configured such that medium temperature water present between upper and lower parts of a hot water storage tank and high temperature water present in the upper part of the hot water storage tank are mixed to have a predetermined set temperature for hot water and the mixed water is used as a heat source (refer to, for example, Patent Literature 1). Effectively using the medium temperature water in the above-described manner can increase available heat in the hot water storage tank. Since the medium temperature water is used, the medium temperature water in the hot water storage tank is reduced. This leads to lower temperature of the water flowing into a heat pump unit.

A typical heat pump unit includes an internal heat exchanger to exchange heat between refrigerant leaving a water heat exchanger and refrigerant leaving an air heat exchanger. The internal heat exchanger is used to prevent a rise in high-pressure-side pressure caused by high temperature water flowing into the water heat exchanger. In a configuration with no internal heat exchanger, a high-pressure-side pressure is likely to rise because high density refrigerant moves to the water heat exchanger. In contrast, in the configuration with the internal heat exchanger, an excessive rise in high-pressure-side pressure can be suppressed because high density refrigerant moves to the air heat exchanger. However, if medium temperature water in a hot water storage tank is used, the water flowing into the heat pump unit will decrease in temperature. From the viewpoint of cost reduction, the need for the internal heat exchanger decreases.

In the above-described typical hot water supply apparatus operating under low outdoor air temperature conditions, the temperature of the air heat exchanger may fall to or below zero degrees C such that the air heat exchanger is frosted. If the air heat exchanger is frosted, the heat transfer performance of the air heat exchanger will become worse, resulting in an increase in power consumption. For this reason, in the related art, the pressure reducing device is fully opened and a defrosting operation for removing frost on the air heat exchanger is performed.

In the defrosting operation, high temperature refrigerant discharged from the compressor flows into the air heat exchanger, thereby removing the frost on the air heat exchanger. In the final phase of the defrosting operation, most of the frost is melted. Consequently, the refrigerant decreases in density at an inlet of the pressure reducing device and flows at higher speed, thus increasing the sound of the refrigerant passing through the pressure reducing device.

A developed technique for suppressing an increase in sound of the passing refrigerant includes reducing an operating frequency of the compressor in the final phase of the defrosting operation (refer to Patent Literature 2, for example). A reduction in operating frequency of the compressor results in a reduction in circulation rate of the refrigerant that is circulated through the refrigerant circuit, causing a reduction in refrigerant flow speed at the inlet of the pressure reducing device. Thus, the sound of the refrigerant passing through the pressure reducing device can be reduced.

Citation List

Patent Literature

Patent Literature 1: Japanese Unexamined Patent Application Publication No. 2003-240342
Patent Literature 2: Japanese Unexamined Patent Application Publication No. 2005-188863

DE 10 2007 056 461 A1 discloses a hot water supply apparatus according to the preamble of claim 1. This hot water supply apparatus includes a heat pump and a storage tank for storing hot water heated by the heat pump. The heat pump includes a compressor, a refrigerant-water heat exchanger, an expansion valve, an air-refrigerant heat exchanger, and a discharge temperature sensor for detecting the refrigerant temperature discharged from the compressor. When a current value detected by a current sensor used for detecting current supplied to the heat pump exceeds a predetermined upper limit current value, the frequency of electric driving power supplied to the compressor is lowered, and when the current value detected thereafter falls below a predetermined recovery current value, which is smaller than the upper limit current value, the frequency of the electric drive power is raised, increasing the opening of the expansion valve, and a target discharge temperature for the refrigerant discharged from the compressor is lowered.

Summary of Invention

Technical Problem

For the defrosting operation in the configuration with no internal heat exchanger, the refrigerant on the high-pressure side is subjected to heat exchange in the air heat exchanger and is then sucked into the compressor upon start of the defrosting operation. At this time, the refrigerant sucked into the compressor is in a wetter state than that in the configuration with the internal heat exchanger. In other words, the refrigerant sucked into the compressor has a higher density, resulting in an increase in flow speed of the refrigerant. This leads to an increase in sound, or refrigerant passing sound, of the refrigerant passing through the pressure reducing device.

The present invention has been made to solve the above-described problem, and aims to provide a hot water supply apparatus in which an increase in refrigerant passing sound upon start of the defrosting operation can be suppressed.

Solution to Problem

The solution is defined in the appended set of claims. A hot water supply apparatus according to an embodiment of the present invention includes a heat pump unit that includes a compressor, a water heat exchanger, a pressure reducing device, and an air heat exchanger and that is configured to heat water flowing through the water heat exchanger, a compressor control unit configured to control an operating frequency of the compressor, and a pressure reducing device control unit configured to control an opening degree of the pressure reducing device. Upon start of a defrosting operation in which the pressure reducing device is opened, supply of the water to the water heat exchanger is stopped, and refrigerant discharged from the compressor is caused to flow into the air heat exchanger, at least one of the operating frequency of the compressor and the opening degree of the pressure reducing device is controlled by the compressor control unit or the pressure reducing device control unit, thereby reducing flow speed of the refrigerant flowing into the pressure reducing device.

Advantageous Effects of Invention

According to the embodiment of the present invention, upon start of the defrosting operation, the operating frequency of the compressor or the opening degree of the pressure reducing device is controlled, thereby reducing the flow speed of the refrigerant flowing into the pressure reducing device. This can suppress an increase in refrigerant passing sound upon start of the defrosting operation.

Brief Description of Drawings

[Fig. 1] Fig. 1 is a schematic diagram of an exemplary configuration of a hot water supply apparatus according to Embodiment 1.
[Fig. 2] Fig. 2 is a block diagram of an exemplary configuration of a controller in Fig. 1.
[Fig. 3] Fig. 3 is a graph showing an example of a refrigeration cycle upon start of a defrosting operation.
[Fig. 4] Fig. 4 is a schematic diagram of an exemplary configuration of a hot water supply apparatus according to Embodiment 2.
[Fig. 5] Fig. 5 is a block diagram of an exemplary configuration of a controller in Fig. 4.
[Fig. 6] Fig. 6 is a flowchart illustrating an example of a process of reducing passing sound in Embodiment 2.
[Fig. 7] Fig. 7 is a schematic diagram of an exemplary configuration of a hot water supply apparatus according to Embodiment 3.
[Fig. 8] Fig. 8 is a block diagram of an exemplary configuration of a controller in Fig. 7.
[Fig. 9] Fig. 9 is a schematic diagram of an exemplary configuration of a hot water supply apparatus according to Embodiment 4.
[Fig. 10] Fig. 10 is a block diagram of an exemplary configuration of a controller in Fig. 9.
[Fig. 11] Fig. 11 is a schematic diagram of an exemplary configuration of a hot water supply apparatus according to Embodiment 5.
[Fig. 12] Fig. 12 is a block diagram of an exemplary configuration of a controller in Fig. 11.
[Fig. 13] Fig. 13 is a flowchart illustrating an example of a process of reducing passing sound in Embodiment 5.
[Fig. 14] Fig. 14 is a schematic diagram of an exemplary configuration of a hot water supply apparatus according to Embodiment 6.
[Fig. 15] Fig. 15 is a block diagram of an exemplary configuration of a controller in Fig. 14.
[Fig. 16] Fig. 16 is a graph showing an example of a refrigeration cycle upon start of the defrosting operation.

Description of Embodiments

Embodiment 1.

A hot water supply apparatus according to Embodiment 1 of the present invention will be described below. The hot water supply apparatus according to Embodiment 1 includes a heat pump that causes heat exchange between water stored in a hot water storage tank and refrigerant to heat the water and causes the heated water to be stored in the hot water storage tank.

[Configuration of Hot Water Supply Apparatus 1]

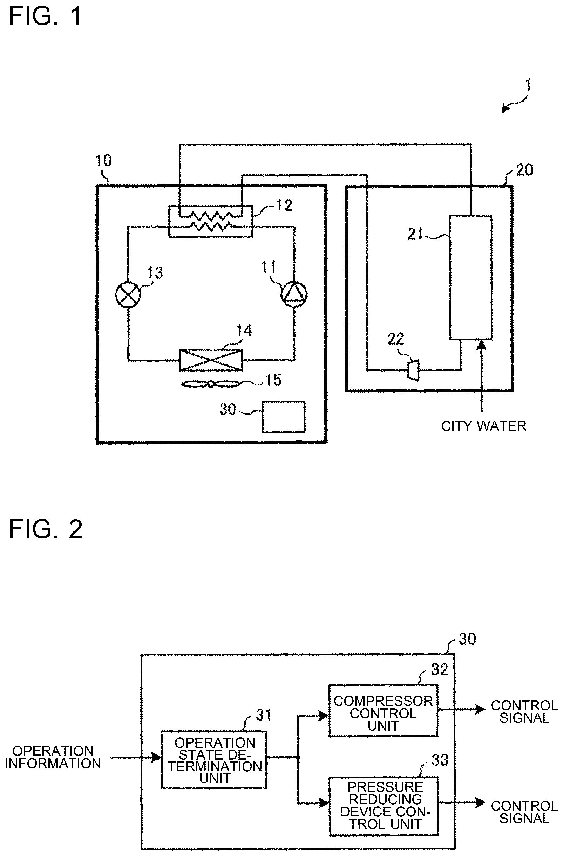

Fig. 1 is a schematic diagram of an exemplary configuration of a hot water supply apparatus 1 according to Embodiment 1. As illustrated in Fig. 1, the hot water supply apparatus 1 includes a heat pump unit 10 and a tank unit 20.

(Heat Pump Unit 10)

The heat pump unit 10 includes a compressor 11, a water heat exchanger 12, a pressure reducing device 13, an air heat exchanger 14, and a fan 15. The compressor 11, the water heat exchanger 12, the pressure reducing device 13, and the air heat exchanger 14 are connected in circuit by refrigerant pipes to form a refrigerant circuit.
The compressor 11 sucks low temperature, low pressure refrigerant, compresses the sucked refrigerant into high temperature, high pressure refrigerant, and discharges the refrigerant. The compressor 11 is, for example, an inverter compressor whose capacity, which corresponds to the amount of refrigerant sent per unit time, is controlled by changing an operating frequency, for example. The operating frequency of the compressor 11 is controlled by a controller 30, which will be described later.
The water heat exchanger 12 exchanges heat between the refrigerant flowing through the refrigerant circuit connected to a refrigerant passage and water flowing through a water circuit connected to a water passage. The water heat exchanger 12 functions as a condenser that transfers heat from the refrigerant to the water to condense the refrigerant. The pressure reducing device 13 reduces the pressure of the refrigerant. The pressure reducing device 13 includes a valve whose opening degree can be controlled, for example, an electronic expansion valve. The opening degree of the pressure reducing device 13 is controlled by the controller 30.
The air heat exchanger 14 exchanges heat between the refrigerant and outdoor air supplied by the fan 15. In a heating operation, the air heat exchanger 14 functions as an evaporator that evaporates the refrigerant to cool the outdoor air with heat of vaporization of the refrigerant. The fan 15 is driven by a motor (not illustrated) and is provided to send outdoor air, which is to be used for heat exchange with the refrigerant in the air heat exchanger 14, to the air heat exchanger 14.

(Tank Unit 20)

The tank unit 20 in Fig. 1 includes a hot water storage tank 21 and a water pump 22. The hot water storage tank 21 and the water pump 22 are connected in circuit by water pipes to form the water circuit.

The hot water storage tank 21 stores water supplied from the outside and heated water. The hot water storage tank 21 has a water intake and an outlet in its lower part. The hot water storage tank 21 receives city water supplied from the outside through the water intake and stores the supplied city water as water that is not heated, or unheated water. The unheated water stored in the lower part of the hot water storage tank 21 flows out of the tank through the outlet and is supplied to the water heat exchanger 12.

The hot water storage tank 21 has an inlet in its upper part. The hot water storage tank 21 receives heated water, heated by the water heat exchanger 12, through the inlet and stores the supplied heated water. The heated water stored in the upper part of the hot water storage tank 21 is discharged to the outside and is used as hot water for a shower, for example.

The water pump 22 is driven by a motor (not illustrated), and supplies water leaving the hot water storage tank 21 to the water heat exchanger 12. Driving of the water pump 22 is controlled by the controller 30.

(Controller 30)

The hot water supply apparatus 1 further includes the controller 30. The controller 30 controls, based on various pieces of information from components of the hot water supply apparatus 1, an overall operation of the heat pump unit 10 and that of the tank unit 20. In particular, in Embodiment 1, the controller 30 controls, for example, the operating frequency of the compressor 11 and the opening degree of the pressure reducing device 13.

In this exemplary configuration, the controller 30 is disposed in the heat pump unit 10. The configuration is not limited to this example. The controller 30 may be disposed in the tank unit 20 or may be disposed separately. The controller 30 is configured such that various functions are implemented by software running on an arithmetic device, such as a microcomputer. Alternatively, the controller 30 is configured by hardware, such as circuit devices that implement various functions.

Fig. 2 is a block diagram of an exemplary configuration of the controller 30 in Fig. 1. As illustrated in Fig. 2, the controller 30 includes an operation state determination unit 31, a compressor control unit 32, and a pressure reducing device control unit 33. The operation state determination unit 31 determines, based on operation information supplied from the outside and representing an operation state of the heat pump unit 10, whether the operation state of the heat pump unit 10 is the defrosting operation.

In response to a determination result of the operation state determination unit 31 and representing that the operation state of the heat pump unit 10 is the defrosting operation, the compressor control unit 32 outputs a control signal for reducing the operating frequency of the compressor 11. Furthermore, in response to such a determination result of the operation state determination unit 31 and representing that the operation state of the heat pump unit 10 is the defrosting operation, the pressure reducing device control unit 33 outputs a control signal for reducing the opening degree of the pressure reducing device 13. In Embodiment 1, if the operation state of the heat pump unit 10 is the defrosting operation, either one of the operating frequency of the compressor 11 and the opening degree of the pressure reducing device 13 may be controlled.

[Behavior of Hot Water Supply Apparatus 1]

The behavior of the hot water supply apparatus 1 with the above-described configuration will now be described. The following description will focus on the flows of refrigerant and water in a normal operation and the behavior of the apparatus upon start of the defrosting operation.

(Flows of Refrigerant and Water)

The flows of refrigerant and water in the normal operation will now be described. For the refrigerant flowing through the refrigerant circuit, the refrigerant is compressed and discharged by the compressor 11. The refrigerant discharged from the compressor 11 flows into the water heat exchanger 12. The refrigerant flowing through the water heat exchanger 12 exchanges heat with the water flowing through the water circuit and condenses while transferring heat to the water, thus heating the water. Then, the refrigerant flows out of the water heat exchanger 12.

The refrigerant leaving the water heat exchanger 12 is reduced in pressure and expanded by the pressure reducing device 13. Then, the refrigerant flows out of the pressure reducing device 13. The refrigerant leaving the pressure reducing device 13 flows into the air heat exchanger 14. The refrigerant flowing through the air heat exchanger 14 exchanges heat with the outdoor air, removes heat from the outdoor air, and thus evaporates. Then, the refrigerant flows out of the air heat exchanger 14. The refrigerant leaving the air heat exchanger 14 is sucked into the compressor 11. The refrigerant is repeatedly circulated in the above-described manner.

In the tank unit 20, the water pump 22 is driven, so that the unheated water flows out of the hot water storage tank 21 through the outlet located in the lower part of the tank. The unheated water leaving the hot water storage tank 21 flows into the water heat exchanger 12. The unheated water flowing through the water heat exchanger 12 exchanges heat with the refrigerant and is thus heated. Then, the heated water flows out of the water heat exchanger 12. The heated water leaving the water heat exchanger 12 flows into the hot water storage tank 21 through the inlet located in the upper part of the hot water storage tank 21 and is stored in the hot water storage tank 21. The unheated water in the hot water storage tank 21 is repeatedly circulated in the above-described manner.

(Behavior upon Start of Defrosting Operation)

The behavior of the apparatus upon start of the defrosting operation will now be described. In the case where the hot water supply apparatus 1 is operated in the above-described manner under low outdoor air temperature conditions, the temperature of the air heat exchanger 14 falls to or below zero degrees C and the air heat exchanger 14 is thus frosted. For this reason, the defrosting operation is performed.

In a normal defrosting operation, the compressor 11 is operated under conditions where the pressure reducing device 13 is fully opened and supply of the unheated water to the water heat exchanger 12 is stopped. In this case, the amount of heat exchanged in the water heat exchanger 12 decreases, the refrigerant is maintained at a high temperature accordingly, and the high temperature refrigerant flows into the air heat exchanger 14. Consequently, frost on the air heat exchanger 14 is melted by heat from the refrigerant.

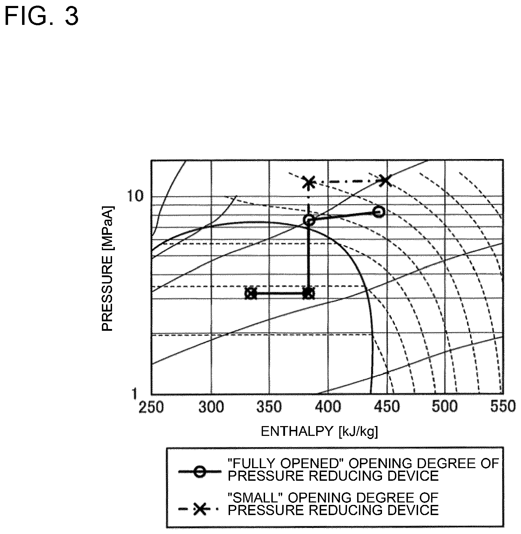

Fig. 3 is a graph showing an example of a refrigeration cycle upon start of the defrosting operation. In Fig. 3, broken lines are isotherms and solid lines are isopycnic lines. In Fig. 3, a thick solid line represents a refrigerant state under conditions where the pressure reducing device 13 has a fully opened opening degree, and a thick alternate long and short dashed line represents a refrigerant state under conditions where the pressure reducing device 13 has a small opening degree. In a case where the opening degree of the pressure reducing device 13 is fully opened upon start of the defrosting operation as in the related art, the density of the refrigerant sucked into the compressor 11 increases as illustrated in Fig. 3. This results in an increase in flow speed of the refrigerant at an inlet of the pressure reducing device 13, leading to an increase in sound of the refrigerant passing through the pressure reducing device 13.

In Embodiment 1, to reduce the refrigerant passing sound at the inlet of the pressure reducing device 13, the operating frequency of the compressor 11 or the opening degree of the pressure reducing device 13 is reduced upon start of the defrosting operation.

Reducing the operating frequency of the compressor 11 reduces the circulation rate of the refrigerant upon start of the defrosting operation, thus reducing the flow speed of the refrigerant at the inlet of the pressure reducing device 13. A reduction in flow speed of the refrigerant at the inlet of the pressure reducing device 13 results in a reduction in sound of the refrigerant passing through the pressure reducing device 13.

Reducing the opening degree of the pressure reducing device 13 increases the density of the refrigerant at the inlet of the pressure reducing device 13 upon start of the defrosting operation, as illustrated in Fig. 3, thus reducing the flow speed of the refrigerant at the inlet of the pressure reducing device 13. A reduction in flow speed of the refrigerant at the inlet of the pressure reducing device 13 results in a reduction in sound of the refrigerant passing through the pressure reducing device 13.

As described above, in the hot water supply apparatus 1 according to Embodiment 1, the operating frequency of the compressor 11 or the opening degree of the pressure reducing device 13 is regulated to a smaller value upon start of the defrosting operation. Consequently, the flow speed of the refrigerant flowing into the pressure reducing device 13 is reduced, thus suppressing an increase in sound of the refrigerant passing through the pressure reducing device 13.

Embodiment 2.

Embodiment 2 of the present invention will be described below. Embodiment 2 will be described using a concrete example in which the operating frequency of the compressor 11 is reduced upon start of the defrosting operation to reduce the refrigerant passing sound at the inlet of the pressure reducing device 13.

Let $W_{hp}$ denote the power consumption of the heat pump unit 10 and let $W_{tank}$ denote the power consumption of the tank unit 20. The hot water supply apparatus 1 has an input power $W_{sys}$ given below by Equation (1).

$$W_{sys} = W_{hp} + W_{tank} \qquad \ldots(1)$$

Let $W_{comp}$ denote the input power of the compressor. The power consumption $W_{hp}$ of the heat pump unit 10 is calculated using Equation (2).

$$W_{hp} = W_{comp} \times \alpha \qquad \ldots(2)$$

where $\alpha$ is a factor determined based on the specification of the heat pump unit 10.

Let $I_{comp}$ denote a current through the compressor 11 and let $V_{comp}$ denote a voltage applied to the compressor 11. The compressor input power $W_{comp}$ is calculated using Equation (3).

$$W_{comp} = I_{comp} \times V_{comp} \qquad \ldots(3)$$

Let $\rho_s$ denote a suction density of refrigerant sucked into the compressor 11, let $f_z$ denote the operating frequency of the compressor 11, let $h_d$ denote the enthalpy of refrigerant discharged from the compressor 11, and let $h_s$ denote the enthalpy of refrigerant sucked into the compressor 11. The compressor input power $W_{comp}$ can also be expressed by Equation (4).

$$W_{comp} = \rho_s \times f_z \times \beta \times (h_d - h_s) \qquad \ldots(4)$$

where $\beta$ is a factor determined based on the specification of the heat pump unit 10.

In general, as the suction density at the compressor 11 increases, the circulation rate of the refrigerant flowing through the refrigerant circuit increases. This results in an increase in flow speed of the refrigerant at the inlet of the pressure reducing device 13, causing an increase in sound of the refrigerant passing through the pressure reducing device 13. As is evident from Equation (4), as the suction density $\rho_s$ at the compressor 11 increases, the compressor input power $W_{comp}$ increases.

In other words, it is evident that the compressor input power $W_{comp}$ correlates with the sound of the refrigerant passing through the pressure reducing device 13. Specifically, the refrigerant passing sound increases as the compressor input power $W_{comp}$ increases, whereas the refrigerant passing sound decreases as the compressor input power $W_{comp}$ decreases. Therefore, if the refrigerant passing sound increases, the compressor input power $W_{comp}$ may be reduced. To reduce the compressor input power $W_{comp}$, as is clear from Equation (4), the operating frequency $f_z$ of the compressor 11 may be reduced.

In Embodiment 2, the operating frequency of the compressor 11 is controlled based on the compressor input power of the compressor 11, thereby reducing the sound of the refrigerant passing through the pressure reducing device 13.

[Configuration of Hot Water Supply Apparatus 100]

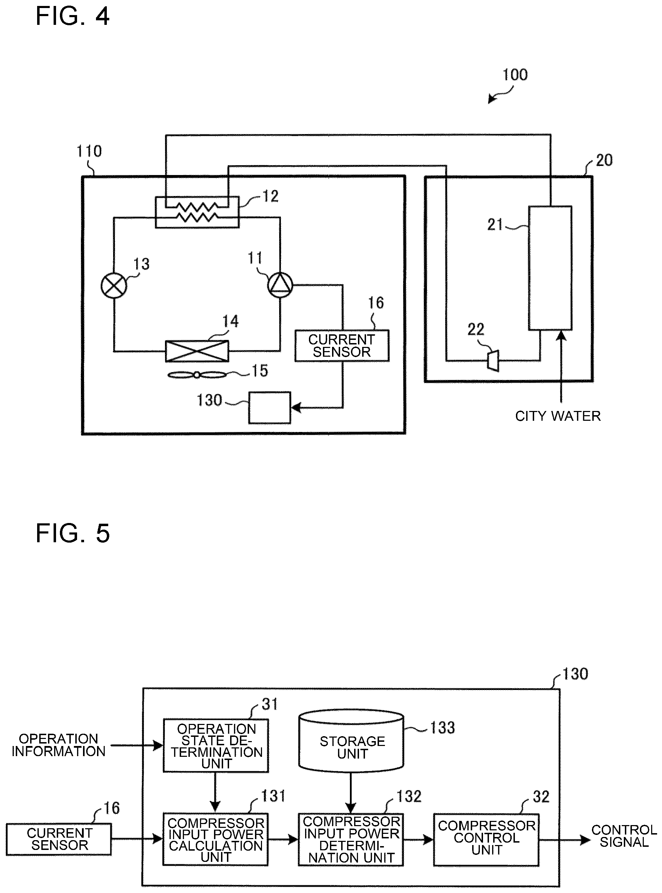

Fig. 4 is a schematic diagram of an exemplary configuration of a hot water supply apparatus 100 according to Embodiment 2. In the following description, components common to Embodiment 1 are designated by the same reference signs, and a detailed description of these components is omitted.

As illustrated in Fig. 4, the hot water supply apparatus 100 includes a heat pump unit 110 and the tank unit 20. The heat pump unit 110 includes the compressor 11, the water heat exchanger 12, the pressure reducing device 13, the air heat exchanger 14, and the fan 15. The heat pump unit 110 further includes a current sensor 16. The current sensor 16 detects a current supplied to the compressor 11 and sends information on the detected current to a controller 130.

The hot water supply apparatus 100 further includes the controller 130. In this exemplary configuration, the controller 130 is disposed in the heat pump unit 110. The configuration is not limited to this example. The controller 130 may be disposed in the tank unit 20 or may be disposed separately. The controller 130 controls the operating frequency of the compressor 11 on the basis of the information on the current through the compressor 11 sent from the current sensor 16 and a voltage applied to the compressor 11. The controller 130 is configured such that various functions are implemented by software running on an arithmetic device, such as a microcomputer. Alternatively, the controller 130 is configured by hardware, such as circuit devices that implement various functions.

(Configuration of Controller 130)

Fig. 5 is a block diagram of an exemplary configuration of the controller 130 in Fig. 4. As illustrated in Fig. 5, the controller 130 includes the operation state determination unit 31, a compressor input power calculation unit 131, a compressor input power determination unit 132, the compressor control unit 32, and a storage unit 133. The compressor input power calculation unit 131 calculates a compressor input power from the information on the current through the compressor 11 sent from the current sensor 16 and a set voltage of, for example, 200 V, applied to the compressor 11.

The compressor input power determination unit 132 compares the compressor input power calculated by the compressor input power calculation unit 131 with a compressor input power threshold previously stored in the storage unit 133. In a case where the compressor input power exceeds the threshold, the compressor input power determination unit 132 determines an increase in refrigerant passing sound at the inlet of the pressure reducing device 13. In a case where the compressor input power is less than or equal to the threshold, the compressor input power determination unit 132 determines a reduction in refrigerant passing sound.

The compressor control unit 32 controls the operating frequency of the compressor 11 on the basis of a determination result of the compressor input power determination unit 132. Specifically, in the case where the compressor input power determination unit 132 determines an increase in refrigerant passing sound, the compressor control unit 32 outputs a control signal for reducing the operating frequency of the compressor 11. In the case where a reduction in refrigerant passing sound is determined, the compressor control unit 32 outputs a control signal for increasing the operating frequency of the compressor 11.

The storage unit 133 previously stores various pieces of information used in the components of the controller 130. In particular, in Embodiment 2, the storage unit 133 previously stores the compressor input power threshold, which is used in the compressor input power determination unit 132.

[Process of Reducing Passing Sound]

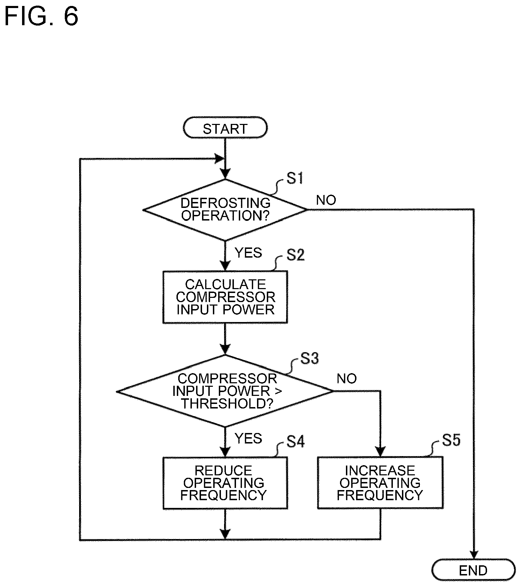

A process of reducing the passing sound in the hot water supply apparatus 100 according to Embodiment 2 will now be described. Fig. 6 is a flowchart illustrating an example of the passing sound reducing process in Embodiment 2.

In step S1, the operation state determination unit 31 determines whether the operation state of the heat pump unit 110 is the defrosting operation. If it is determined that the operation state is the defrosting operation (Yes in step S1), the compressor input power calculation unit 131 calculates, in step S2, a compressor input power from a current through the compressor 11 detected by the current sensor 16 and the set voltage applied to the compressor 11.

In step S3, the compressor input power determination unit 132 reads the compressor input power threshold from the storage unit 133, and compares the compressor input power calculated in step S2 with the threshold read from the storage unit 133. As a result of comparison, if the compressor input power is greater than the threshold (Yes in step S3), the compressor input power determination unit 132 determines an increase in refrigerant passing sound at the inlet of the pressure reducing device 13. In step S4, the compressor control unit 32 outputs a control signal for reducing the operating frequency of the compressor 11. Consequently, the operating frequency of the compressor 11 is reduced.

If the compressor input power is less than or equal to the threshold (No in step S3), the compressor input power determination unit 132 determines a reduction in refrigerant passing sound at the inlet of the pressure reducing device 13. In step S5, the compressor control unit 32 outputs a control signal for increasing the operating frequency of the compressor 11. Consequently, the operating frequency of the compressor 11 is increased.

When processing in step S4 or step S5 is finished, the process returns to step S1. The process including steps S1 to S5 is repeated at set intervals. If it is determined in step S1 that the operation state of the heat pump unit 110 is not the defrosting operation (No in step S1), the process including such a series of steps is terminated.

As described above, in Embodiment 2, in the case where an increase in refrigerant passing sound at the inlet of the pressure reducing device 13 is determined based on an increase in compressor input power of the compressor 11, the operating frequency of the compressor 11 is reduced. Thus, the refrigerant passing sound upon start of the defrosting operation can be reduced. In the case where a reduction in refrigerant passing sound is determined based on a reduction in compressor input power, the operating frequency of the compressor 11 is increased. This results in an increase in circulation rate of the refrigerant through the refrigerant circuit. This enables much heat to be sent to the air heat exchanger 14, thus reducing defrosting time.

In this example, the operating frequency of the compressor 11 is controlled based on a current through the compressor 11. The manner of control is not limited to this example. For example, the operating frequency of the compressor 11 may be controlled based on, for example, the compressor input power of the compressor 11, the power consumption of the heat pump unit 110, or the input power of the hot water supply apparatus 100.

In Embodiment 2, the compressor input power $W_{comp}$ of the compressor 11 is calculated from the current $I_{comp}$ flowing through the compressor 11 detected by the current sensor 16 and the voltage $V_{comp}$ applied to the compressor 11. In this case, for example, a sensor capable of directly detecting the compressor input power $W_{comp}$ may be disposed instead of the current sensor 16. The operating frequency $f_z$ of the compressor 11 can be controlled based on the detected compressor input power $W_{comp}$.

As is clear from Equation (2), the power consumption $W_{hp}$ of the heat pump unit 110 is a value that depends on the compressor input power $W_{comp}$ of the compressor 11. In other words, the refrigerant passing sound, which correlates with the compressor input power $W_{comp}$, also correlates with the power consumption $W_{hp}$ of the heat pump unit 110. For example, a sensor capable of detecting the power consumption $W_{hp}$ of the heat pump unit 110 may be disposed. The operating frequency $f_z$ of the compressor 11 can be controlled based on the detected power consumption $W_{hp}$ of the heat pump unit 110.

As is clear from Equation (1), the input power $W_{sys}$ of the hot water supply apparatus 100 is a value that depends on the power consumption $W_{hp}$ of the heat pump unit 110 and the power consumption $W_{tank}$ of the tank unit 20. The power consumption $W_{tank}$ of the tank unit 20 is determined by an operation state of the tank unit 20. As long as the tank unit 20 is in a constant operation state, the power consumption $W_{tank}$ is substantially fixed regardless of the operation state of the heat pump unit 110. Specifically, in a case where the tank unit 20 is in the constant operation state upon start of the defrosting operation, the input power $W_{sys}$ of the hot water supply apparatus 100 depends on the operation state of the heat pump unit 110, as is evident from Equation (1). For example, a sensor capable of detecting the input power $W_{sys}$ of the hot water supply apparatus 100 may be disposed. The operating frequency fz of the compressor 11 can be controlled based on the detected input power $W_{sys}$ of the hot water supply apparatus 100.

As described above, in the hot water supply apparatus 100 according to Embodiment 2, the compressor input power of the compressor 11 is compared with the set threshold. In the case where the compressor input power exceeds the set threshold, the operating frequency of the compressor 11 is regulated to a lower value. This results in a reduction in flow speed of the refrigerant flowing into the pressure reducing device 13, thus suppressing an increase in sound of the refrigerant passing through the pressure reducing device 13.


Embodiment 3.

Embodiment 3 of the present invention will be described below. Embodiment 3 differs from Embodiment 2 in that a discharge temperature of the refrigerant discharged from the compressor 11 is detected and the operating frequency of the compressor 11 is controlled based on the detected discharge temperature.


[Configuration of Hot Water Supply Apparatus 200]

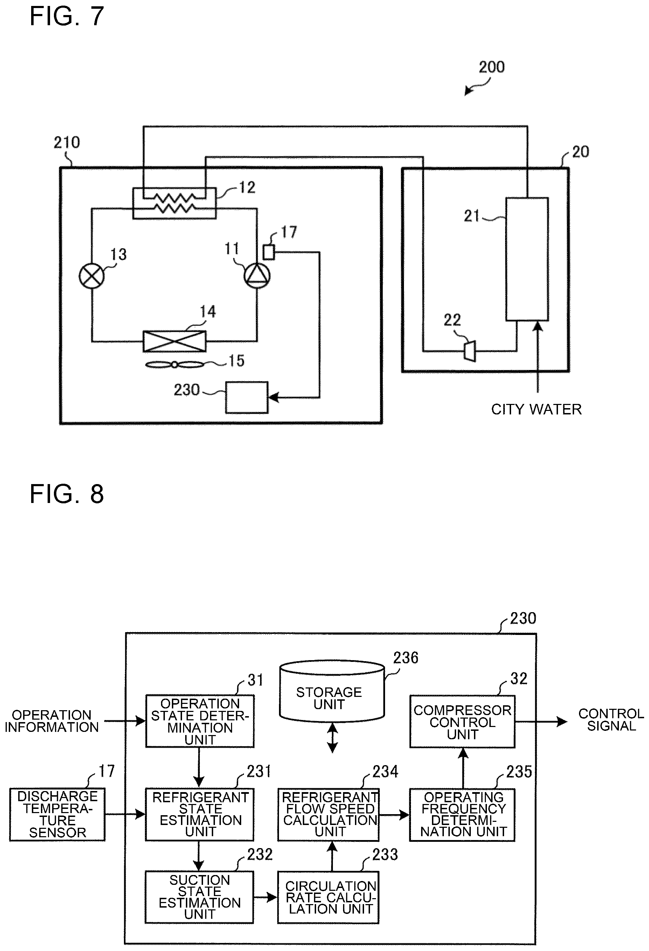

Fig. 7 is a schematic diagram of an exemplary configuration of a hot water supply apparatus 200 according to Embodiment 3. In the following description, components common to Embodiments 1 and 2 are designated by the same reference signs, and a detailed description of these components is omitted.

As illustrated in Fig. 7, the hot water supply apparatus 200 includes a heat pump unit 210 and the tank unit 20. The heat pump unit 210 includes the compressor 11, the water heat exchanger 12, the pressure reducing device 13, the air heat exchanger 14, and the fan 15. The heat pump unit 210 further includes a discharge temperature sensor 17. The discharge temperature sensor 17 detects a discharge temperature of the refrigerant discharged from the compressor 11 and sends information on the detected discharge temperature to a controller 230.

The hot water supply apparatus 200 further includes the controller 230. In this exemplary configuration, the controller 230 is disposed in the heat pump unit 210. The configuration is not limited to this example. The controller 230 may be disposed in the tank unit 20 or may be disposed separately. The controller 230 controls the operating frequency of the compressor 11 on the basis of the information on the refrigerant discharge temperature sent from the discharge temperature sensor 17. The controller 230 is configured such that various functions are implemented by software running on an arithmetic device, such as a microcomputer. Alternatively, the controller 230 is configured by hardware, such as circuit devices that implement various functions.


(Configuration of Controller 230)

Fig. 8 is a block diagram of an exemplary configuration of the controller 230 in Fig. 7. As illustrated in Fig. 8, the controller 230 includes the operation state determination unit 31, a refrigerant state estimation unit 231, a suction state estimation unit 232, a circulation rate calculation unit 233, a refrigerant flow speed calculation unit 234, an operating frequency determination unit 235, the compressor control unit 32, and a storage unit 236.

The refrigerant state estimation unit 231 estimates a high-pressure-side pressure, which is a pressure on a high-pressure side, on the basis of an operating frequency of the compressor 11 and a compressor efficiency of the compressor 11. Then, the refrigerant state estimation unit 231 estimates a state of the refrigerant discharged from the compressor 11 on the basis of the estimated high-pressure-side pressure and the discharge temperature, detected by the discharge temperature sensor 17, of the refrigerant discharged from the compressor 11.

The suction state estimation unit 232 estimates a suction state of the refrigerant to be sucked into the compressor 11 on the basis of the refrigerant state estimated by the refrigerant state estimation unit 231 and the compressor efficiency. The circulation rate calculation unit 233 calculates a refrigerant circulation rate from the refrigerant suction state estimated by the suction state estimation unit 232 and the operating frequency of the compressor 11. The refrigerant flow speed calculation unit 234 calculates a flow speed of the refrigerant at the inlet of the pressure reducing device 13 from the refrigerant suction state estimated by the suction state estimation unit 232 and the refrigerant circulation rate calculated by the circulation rate calculation unit 233.

The operating frequency determination unit 235 calculates a refrigerant circulation rate so that a reduction in sound of the refrigerant passing through the pressure reducing device 13 is achieved at the refrigerant flow speed calculated by the refrigerant flow speed calculation unit 234. Then, the operating frequency determination unit 235 determines an operating frequency of the compressor 11 so that the calculated refrigerant circulation rate is achieved. The compressor control unit 32 outputs a control signal for driving the compressor 11 at the operating frequency determined by the operating frequency determination unit 235.

The storage unit 236 previously stores various pieces of information to be used in the components of the controller 230. In particular, in Embodiment 3, the storage unit 236 stores the compressor efficiency of the compressor 11 and, for example, various factors to be used for calculation in the components.

[Process of Reducing Passing Sound]

A process of reducing the passing sound in the hot water supply apparatus 200 according to Embodiment 3 will now be described. In the case where the operation state of the heat pump unit 210 is the defrosting operation, the refrigerant state estimation unit 231 estimates a high-pressure-side pressure in the refrigerant circuit. The high-pressure-side pressure can be estimated based on the operating frequency of the compressor 11 and the compressor efficiency stored in the storage unit 236. Furthermore, the refrigerant state estimation unit 231 estimates a state of the refrigerant discharged from the compressor 11 on the basis of the estimated high-pressure-side pressure and the refrigerant discharge temperature detected by the discharge temperature sensor 17.

The suction state estimation unit 232 estimates a suction state of the refrigerant to be sucked into the compressor 11 on the basis of the refrigerant state estimated by the refrigerant state estimation unit 231 and the compressor efficiency stored in the storage unit 236.

The circulation rate calculation unit 233 calculates a refrigerant circulation rate from the refrigerant suction state estimated by the suction state estimation unit 232 and the operating frequency of the compressor 11. Let $\rho_s$ denote the refrigerant suction state and let $f_z$ denote the operating frequency of the compressor 11. The refrigerant circulation rate, $G_r$, is calculated using Equation (5). In Equation (5), $\gamma$ is a correction factor determined based on the specification of the heat pump unit 210.

$$G_r = \rho_s \times f_z \times \gamma \qquad\qquad ...(5)$$

The refrigerant circulation rate $G_r$ can also be calculated from a refrigerant flow speed at the inlet of the pressure reducing device 13. Let $V_{lev}$ denote the refrigerant flow speed and let $r_{in}$ denote the diameter of an inlet pipe of the pressure reducing device 13. The refrigerant circulation rate $G_r$ is calculated using Equation (6). The refrigerant flow speed calculation unit 234 calculates the refrigerant flow speed $V_{lev}$ at the inlet of the pressure reducing device 13 using Equation (6). The refrigerant circulation rate $G_r$ used at this time is the value calculated using Equation (5).

$$G_r = \rho_s \times V_{lev} \times r_{in} \qquad\qquad ...(6)$$

As described above, the refrigerant flow speed correlates with the refrigerant circulation rate of the refrigerant flowing through the refrigerant circuit. In other words, a change in refrigerant flow speed causes a change in refrigerant circulation rate, and the change in refrigerant circulation rate causes a change in sound of the refrigerant passing through the pressure reducing device 13. Therefore, the refrigerant flow speed may be reduced to reduce the refrigerant passing sound.

The operating frequency determination unit 235 calculates the refrigerant circulation rate $G_r$ so that a reduction in sound of the refrigerant passing through the pressure reducing device 13 is achieved at the refrigerant flow speed $V_{lev}$ calculated by the refrigerant flow speed calculation unit 234. Then, the operating frequency determination unit 235 calculates the operating frequency $f_z$ of the compressor 11 from the calculated refrigerant circulation rate $G_r$ by using Equation (5). The operating frequency $f_z$ calculated at this time is a frequency at which a reduction in refrigerant passing sound is achieved.

As described above, in Embodiment 3, the refrigerant flow speed at the inlet of the pressure reducing device 13 is calculated from the discharge temperature of the refrigerant discharged from the compressor 11. Then, the operating frequency of the compressor 11 is determined so that a reduction in sound of the refrigerant passing through the pressure reducing device 13 is achieved at the calculated refrigerant flow speed. Consequently, the operating frequency for reducing the refrigerant passing sound can be determined finely. This prevents an excessive reduction in operating frequency, thus reducing the defrosting time.

As described above, in the hot water supply apparatus 200 according to Embodiment 3, a suction state of the refrigerant to be sucked into the compressor 11 is estimated based on a discharge temperature detected by the discharge temperature sensor 17, and a refrigerant circulation rate is calculated from the estimated suction state. An operating frequency of the compressor 11 is determined based on the calculated refrigerant circulation rate. Consequently, the operating frequency of the compressor 11 is set to an operating frequency at which a reduction in flow speed of the refrigerant flowing into the pressure reducing device 13 is achieved, thus suppressing an increase in sound of the refrigerant passing through the pressure reducing device 13.

Embodiment 4.

Embodiment 4 of the present invention will be described below. Embodiment 4 differs from Embodiment 3 in that a high-pressure-side pressure sensor is disposed in the refrigerant circuit. In Embodiment 3, a high-pressure-side pressure is estimated, and an operating frequency of the compressor 11 is determined based on the estimated high-pressure-side pressure. In Embodiment 4, the high-pressure-side pressure sensor detects a high-pressure-side pressure, and an operating frequency of the compressor 11 is determined based on the detected high-pressure-side pressure.

[Configuration of Hot Water Supply Apparatus 300]

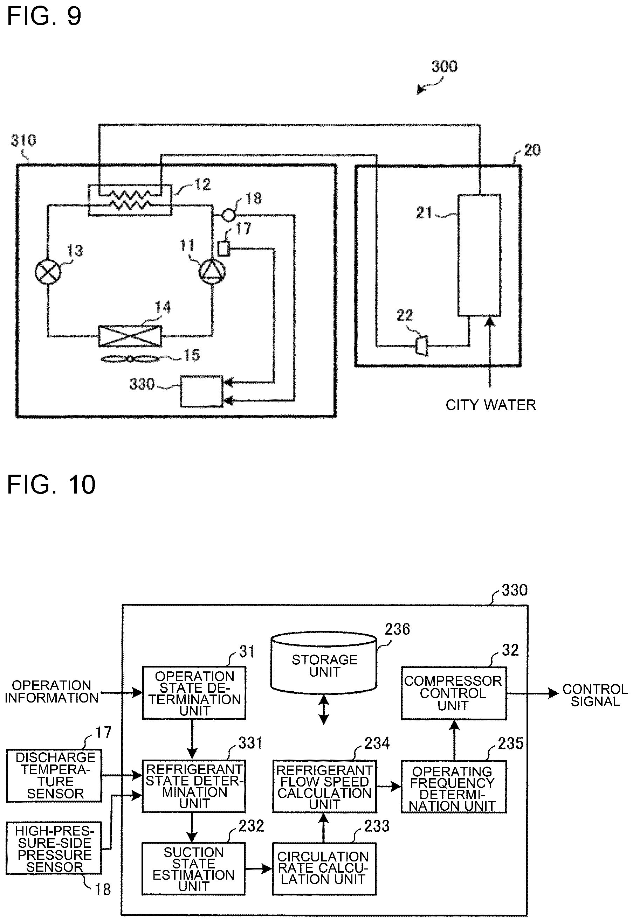

Fig. 9 is a schematic diagram of an exemplary configuration of a hot water supply apparatus 300 according to Embodiment 4. In the following description, components common to Embodiments 1 to 3 are designated by the same reference signs, and a detailed description of these components is omitted.

As illustrated in Fig. 9, the hot water supply apparatus 300 includes a heat pump unit 310 and the tank unit 20. The heat pump unit 310 includes the compressor 11, the water heat exchanger 12, the pressure reducing device 13, the air heat exchanger 14, and the fan 15. The heat pump unit 310 further includes the discharge temperature sensor 17 and a high-pressure-side pressure sensor 18.

The high-pressure-side pressure sensor 18 detects a pressure, which is a high-pressure-side pressure, of the refrigerant discharged from the compressor 11 and sends information on the detected high-pressure-side pressure to a controller 330. In this exemplary configuration, the high-pressure-side pressure sensor 18 is disposed between a discharge side of the compressor 11 and the water heat exchanger 12. The configuration is not limited to this example. The high-pressure-side pressure sensor 18 may be disposed at any position between the discharge side of the compressor 11 and the inlet of the pressure reducing device 13.

The hot water supply apparatus 300 further includes the controller 330. In the exemplary configuration, the controller 330 is disposed in the heat pump unit 310. The configuration is not limited to this example. The controller 330 may be disposed in the tank unit 20 or may be disposed separately. The controller 330 controls the operating frequency of the compressor 11 on the basis of information on a refrigerant discharge temperature sent from the discharge temperature sensor 17 and the information on the high-pressure-side pressure sent from the high-pressure-side pressure sensor 18. The controller 330 is configured such that various functions are implemented by software running on an arithmetic device, such as a microcomputer. Alternatively, the controller 330 is configured by hardware, such as circuit devices that implement various functions.

(Configuration of Controller 330)

Fig. 10 is a block diagram of an exemplary configuration of the controller 330 in Fig. 9. As illustrated in Fig. 10, the controller 330 includes the operation state determination unit 31, a refrigerant state determination unit 331, the suction state estimation unit 232, the circulation rate calculation unit 233, the refrigerant flow speed calculation unit 234, the operating frequency determination unit 235, the compressor control unit 32, and the storage unit 236.

The refrigerant state determination unit 331 determines a state of the refrigerant discharged from the compressor 11 on the basis of the high-pressure-side pressure detected by the high-pressure-side pressure sensor 18 and the discharge temperature detected by the discharge temperature sensor 17.

[Process of Reducing Passing Sound]

A process of reducing passing sound in the hot water supply apparatus 300 according to Embodiment 4 will now be described. The passing sound reducing process in Embodiment 4 is the same as that in Embodiment 3, except that a high-pressure-side pressure is detected by the high-pressure-side pressure sensor 18 instead of being estimated as in Embodiment 3. A duplicated explanation of the process will be omitted.

In the case where the operation state of the heat pump unit 310 is the defrosting operation, the refrigerant state determination unit 331 determines a state of the refrigerant discharged from the compressor 11 on the basis of a high-pressure-side pressure detected by the high-pressure-side pressure sensor 18 and a refrigerant discharge temperature detected by the discharge temperature sensor 17. The suction state estimation unit 232 estimates a suction state of the refrigerant to be sucked into the compressor 11 on the basis of the refrigerant state determined by the refrigerant state determination unit 331 and the compressor efficiency stored in the storage unit 236.

The circulation rate calculation unit 233 calculates the refrigerant circulation rate $G_r$ from the refrigerant suction state $\rho_s$ estimated by the suction state estimation unit 232 and the operating frequency $f_z$ of the compressor 11 by using Equation (5). The refrigerant flow speed calculation unit 234 calculates the refrigerant flow speed $V_{lev}$ from the refrigerant circulation rate $G_r$, calculated by the circulation rate calculation unit 233, by using Equation (6).

The operating frequency determination unit 235 calculates the refrigerant circulation rate $G_r$ so that a reduction in sound of the refrigerant passing through the pressure reducing device 13 is achieved at the refrigerant flow speed $V_{lev}$ calculated by the refrigerant flow speed calculation unit 234. Then, the operating frequency determination unit 235 calculates the operating frequency $f_z$ of the compressor 11 from the calculated refrigerant circulation rate $G_r$ by using Equation (5). The operating frequency $f_z$ calculated at this time is a frequency at which a reduction in refrigerant passing sound is achieved.

As described above, in the hot water supply apparatus 300 according to Embodiment 4, the suction state is determined based on the high-pressure-side pressure detected by the high-pressure-side pressure sensor 18 and the discharge temperature detected by the discharge temperature sensor 17. Consequently, the suction state at the compressor 11 is determined more accurately, so that the operating frequency for reducing the refrigerant passing sound is determined more finely. This prevents an excessive reduction in operating frequency, thus reducing the defrosting time.

Embodiment 5.

Embodiment 5 of the present invention will be described below. Embodiment 5 will be described using a concrete example in which the opening degree of the pressure reducing device 13 is controlled upon start of the defrosting operation to reduce the refrigerant passing sound at the inlet of the pressure reducing device 13.

As described in Embodiment 1, reducing the opening degree of the pressure reducing device 13 increases the refrigerant density at the inlet of the pressure reducing device 13 upon start of the defrosting operation, thus reducing the refrigerant flow speed at the inlet of the pressure reducing device 13. A reduction in refrigerant flow speed at the inlet of the pressure reducing device 13 results in a reduction in sound of the refrigerant passing through the pressure reducing device 13.

According to Embodiment 5, the opening degree of the pressure reducing device 13 is controlled so that the refrigerant density at the inlet of the pressure reducing device 13 is greater than or equal to a predetermined value, thereby reducing the sound of the refrigerant passing through the pressure reducing device 13.

[Configuration of Hot Water Supply Apparatus 400]

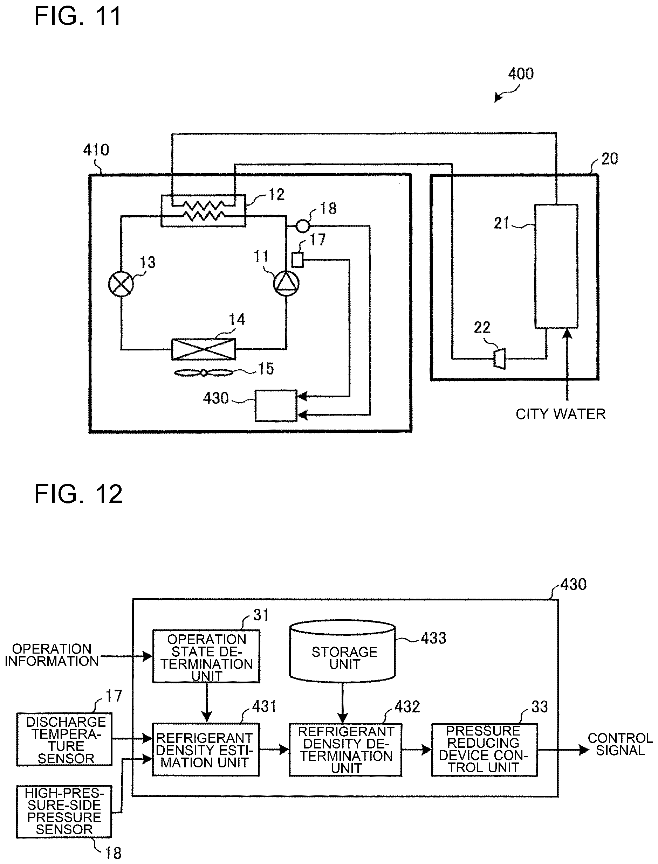

Fig. 11 is a schematic diagram of an exemplary configuration of a hot water supply apparatus 400 according to Embodiment 5. In the following description, components common to Embodiments 1 to 4 are designated by the same reference signs, and a detailed description of these components is omitted.

As illustrated in Fig. 11, the hot water supply apparatus 400 includes a heat pump unit 410 and the tank unit 20. The heat pump unit 410 includes the compressor 11, the water heat exchanger 12, the pressure reducing device 13, the air heat exchanger 14, and the fan 15. The heat pump unit 410 further includes the discharge temperature sensor 17 and the high-pressure-side pressure sensor 18.

The hot water supply apparatus 400 further includes a controller 430. In this exemplary configuration, the controller 430 is disposed in the heat pump unit 410. The configuration is not limited to this example. The controller 430 may be disposed in the tank unit 20 or may be disposed separately. The controller 430 controls the opening degree of the pressure reducing device 13 on the basis of information on a refrigerant discharge temperature sent from the discharge temperature sensor 17 and information on a high-pressure-side pressure sent from the high-pressure-side pressure sensor 18. The controller 430 is configured such that various functions are implemented by software running on an arithmetic device, such as a microcomputer. Alternatively, the controller 430 is configured by hardware, such as circuit devices that implement various functions.

(Configuration of Controller 430)

Fig. 12 is a block diagram of an exemplary configuration of the controller 430 in Fig. 11. As illustrated in Fig. 12, the controller 430 includes the operation state determination unit 31, a refrigerant density estimation unit 431, a refrigerant density determination unit 432, the pressure reducing device control unit 33, and a storage unit 433.

The refrigerant density estimation unit 431 estimates a refrigerant density at the inlet of the pressure reducing device 13 on the basis of a discharge temperature, detected by the discharge temperature sensor 17, of the refrigerant discharged from the compressor 11 and a high-pressure-side pressure detected by the high-pressure-side pressure sensor 18. Although the high-pressure-side pressure is obtained by using the high-pressure-side pressure sensor 18 in this example, the high-pressure-side pressure may be obtained in any other manner. The high-pressure-side pressure may be estimated based on the operating frequency of the compressor 11 and the compressor efficiency as in Embodiment 3.

The refrigerant density determination unit 432 compares the refrigerant density estimated by the refrigerant density estimation unit 431 with a refrigerant density threshold previously stored in the storage unit 433. If the refrigerant density is less than the threshold, the refrigerant density determination unit 432 determines an increase in refrigerant passing sound at the inlet of the pressure reducing device 13. If the refrigerant density is greater than or equal to the threshold, the refrigerant density determination unit 432 determines a reduction in refrigerant passing sound.

The pressure reducing device control unit 33 controls the opening degree of the pressure reducing device 13 on the basis of a determination result of the refrigerant density determination unit 432. Specifically, if the refrigerant density determination unit 432 determines an increase in refrigerant passing sound, the pressure reducing device control unit 33 outputs a control signal for reducing the opening degree of the pressure reducing device 13. If a reduction in refrigerant passing sound is determined, the pressure reducing device control unit 33 outputs a control signal for increasing the opening degree of the pressure reducing device 13.

The storage unit 433 previously stores various pieces of information to be used in the components of the controller 430. In particular, in Embodiment 5, the storage unit 433 previously stores the refrigerant density threshold, which is used in the refrigerant density determination unit 432.

[Process of Reducing Passing Sound]

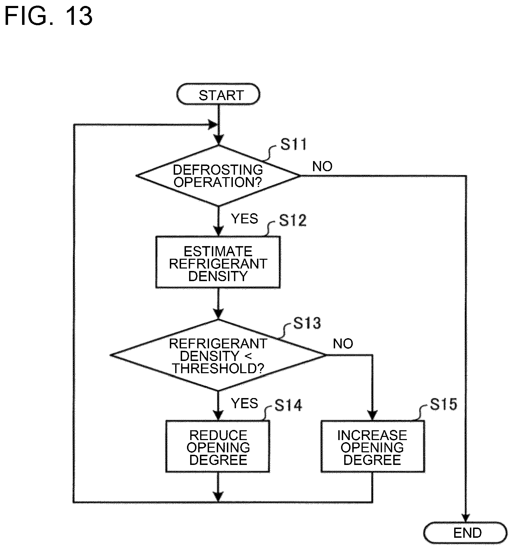

A process of reducing the passing sound in the hot water supply apparatus 400 according to Embodiment 5 will now be described. Fig. 13 is a flowchart illustrating an example of the passing sound reducing process in Embodiment 5.

In step S11, the operation state determination unit 31 determines whether the operation state of the heat pump unit 410 is the defrosting operation. If it is determined that the operation state is the defrosting operation (Yes in step S11), the refrigerant density estimation unit 431 estimates a refrigerant density at the inlet of the pressure reducing device 13 in step S12. The refrigerant density is estimated based on a discharge temperature at the compressor 11 detected by the discharge temperature sensor 17 and a high-pressure-side pressure detected by the high-pressure-side pressure sensor 18.

In step S13, the refrigerant density determination unit 432 reads the refrigerant density threshold from the storage unit 433 and compares the refrigerant density estimated in step S12 with the threshold read from the storage unit 433. As a result of comparison, if the refrigerant density is less than the threshold (Yes in step S13), the refrigerant density determination unit 432 determines an increase in refrigerant passing sound at the inlet of the pressure reducing device 13. In step S14, the pressure reducing device control unit 33 outputs a control signal for reducing the opening degree of the pressure reducing device 13. Consequently, the opening degree of the pressure reducing device 13 is reduced.

If the refrigerant density is greater than or equal to the threshold (No in step S13), the refrigerant density determination unit 432 determines a reduction in refrigerant passing sound at the inlet of the pressure reducing device 13. In step S15, the pressure reducing device control unit 33 outputs a control signal for increasing the opening degree of the pressure reducing device 13. Consequently, the opening degree of the pressure reducing device 13 is increased.

When processing in step S14 or step S15 is finished, the process returns to step S11. The process including steps S11 to S15 is repeated at set intervals. If it is determined in step S11 that the operation state of the heat pump unit 410 is not the defrosting operation (No in step S11), the process including such a series of steps is terminated.

As described above, in Embodiment 5, in the case where an increase in refrigerant passing sound at the inlet of the pressure reducing device 13 is determined based on a reduction in refrigerant density at the inlet of the pressure reducing device 13, the opening degree of the pressure reducing device 13 is reduced. This results in an increase in refrigerant density, causing a reduction in refrigerant flow speed. Thus, the refrigerant passing sound upon start of the defrosting operation can be reduced. In the case where a reduction in refrigerant passing sound is determined based on an increase in refrigerant density, the opening degree of the pressure reducing device 13 is increased. This results in an increase in flow speed of the refrigerant passing through the pressure reducing device 13. This enables much heat to be sent to the air heat exchanger 14, thus reducing the defrosting time.

As described above, in the hot water supply apparatus 400 according to Embodiment 5, a refrigerant density at the inlet of the pressure reducing device 13 is estimated based on a refrigerant discharge temperature and a high-pressure-side pressure, and the estimated refrigerant density is compared with the set threshold. In the case where the refrigerant density is less than the set threshold, the opening degree of the pressure reducing device 13 is regulated to a smaller value. This results in a reduction in flow speed of the refrigerant flowing into the pressure reducing device 13, thus suppressing an increase in sound of the refrigerant passing through the pressure reducing device 13.

Embodiment 6.

Embodiment 6 of the present invention will be described below. In Embodiments 1 to 5 described above, the supply of unheated water to the water heat exchanger 12 is stopped at start of the defrosting operation to reduce the amount of heat exchanged in the water heat exchanger 12, so that high temperature refrigerant flows into the air heat exchanger 14. In this case, the amount of heat transferred in the water heat exchanger 12 can be significantly reduced as compared with that in a normal operation, such as a heating operation. However, this heat transfer causes a slight reduction in temperature of the refrigerant.

In Embodiment 6, to suppress a reduction in temperature caused by heat transfer in the water heat exchanger 12 upon start of the defrosting operation, medium temperature water in the tank unit is caused to flow into the water heat exchanger 12.

[Configuration of Hot Water Supply Apparatus 500]

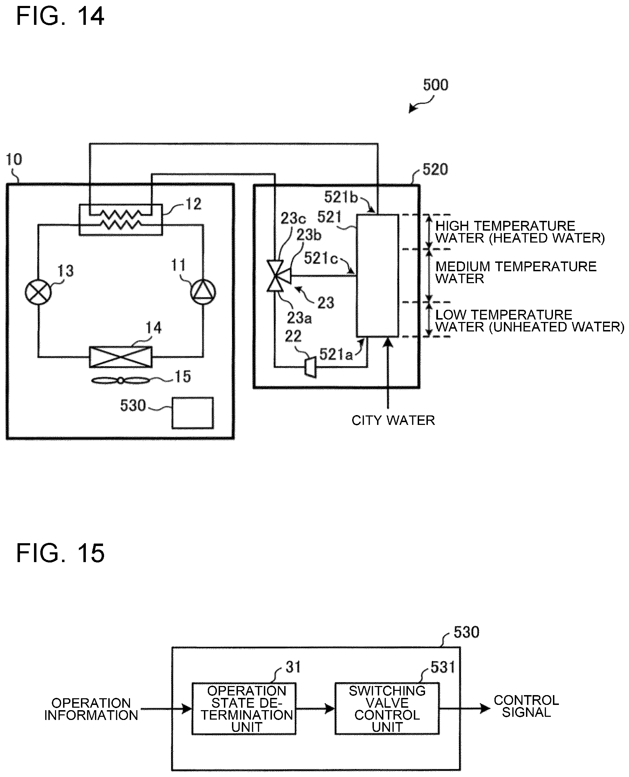

Fig. 14 is a schematic diagram of an exemplary configuration of the hot water supply apparatus 500 according to Embodiment 6. As illustrated in Fig. 14, the hot water supply apparatus 500 includes a heat pump unit 10 and a tank unit 520. In the following description, components common to Embodiments 1 to 5 are designated by the same reference signs, and a detailed description of these components is omitted.

(Tank Unit 520)

The tank unit 520 includes a hot water storage tank 521, the water pump 22, and a flow switching valve 23.

The hot water storage tank 521 stores water supplied from the outside and heated water. The hot water storage tank 521 has a water intake and an unheated water outlet 521a in its lower part. The hot water storage tank 521 receives city water supplied from the outside through the water intake and stores the supplied city water as water that is not heated, or unheated water. The unheated water stored in the lower part of the hot water storage tank 521 flows out of the tank through the unheated water outlet 521a and is supplied to the water heat exchanger 12.

The hot water storage tank 521 has a heated water inlet 521b in its upper part. The hot water storage tank 521 receives heated water, heated by the water heat exchanger 12, through the heated water inlet 521b and stores the supplied heated water. The heated water stored in the upper part of the hot water storage tank 521 is discharged to the outside and is used as hot water for a shower, for example.

The hot water storage tank 521 further has a medium temperature water outlet 521c in its middle part. The hot water storage tank 521 stores, in its middle region, water having a medium temperature between the temperature of the unheated water and that of the heated water. The medium temperature water stored in the middle region of the hot water storage tank 521 flows out of the tank through the medium temperature water outlet 521c and is supplied to the water heat exchanger 12 via the flow switching valve 23.

As described above, the hot water storage tank 521 stores high temperature water, which is the heated water, the medium temperature water, and low temperature water, which is the unheated water, such that the high temperature water, the medium temperature water, and the low temperature water are stored in the upper part, the middle part, and the lower part, respectively. The medium temperature water is produced by mixing the unheated water with the heated water such that the high temperature water is supplied through the heated water inlet 521b into the upper part of the tank storing the unheated water in the lower part.

The flow switching valve 23 is, for example, a three-way valve, and has a first inlet port 23a, a second inlet port 23b, and an outlet port 23c. In the flow switching valve 23, the first inlet port 23a is connected to the unheated water outlet 521a of the hot water storage tank 521, the second inlet port 23b is connected to the medium temperature water outlet 521c, and the outlet port 23c is connected to an inlet side of the water heat exchanger 12.

The flow switching valve 23 switches between passages such that either one of the first inlet port 23a and the second inlet port 23b is in communication with the outlet port 23c. Switching between the passages of the flow switching valve 23 is controlled by a controller 530.

(Controller 530)

The hot water supply apparatus 500 further includes the controller 530. The controller 530 controls, based on various pieces of information from components of the hot water supply apparatus 500, an overall operation of the heat pump unit 10 and that of the tank unit 520. In particular, in Embodiment 6, the controller 530 controls, for example, switching between the passages of the flow switching valve 23.

The controller 530 is configured such that various functions are implemented by software running on an arithmetic device, such as a microcomputer. Alternatively, the controller 530 is configured by hardware, such as circuit devices that implement various functions. In this exemplary configuration, the controller 530 is disposed in the heat pump unit 10. The configuration is not limited to this example. The controller 530 may be disposed in the tank unit 520 or may be disposed separately.

Fig. 15 is a block diagram of an exemplary configuration of the controller 530 in Fig. 14. As illustrated in Fig. 15, the controller 530 includes the operation state determination unit 31 and a switching valve control unit 531.

The switching valve control unit 531 outputs a control signal for switching between the passages of the flow switching valve 23 on the basis of a determination result of the operation state determination unit 31. Specifically, in the case where the operation state of the heat pump unit 10 is the defrosting operation, the switching valve control unit 531 outputs a control signal for switching between the passages to the flow switching valve 23 so that the medium temperature water flowing into the valve through the second inlet port 23b flows out of the valve through the outlet port 23c.

[Process of Reducing Passing Sound]

A process of reducing passing sound in the hot water supply apparatus 500 according to Embodiment 6 will now be described. When the operation state determination unit 31 determines that the defrosting operation has started, the switching valve control unit 531 outputs a control signal to the flow switching valve 23 so that the second inlet port 23b is in communication with the outlet port 23c in the flow switching valve 23.

Consequently, the medium temperature water in the middle region of the hot water storage tank 521 flows out of the tank through the medium temperature water outlet 521c and flows into the water heat exchanger 12 via the flow switching valve 23. In the water heat exchanger 12, the medium temperature water flowing through the water circuit exchanges heat with high temperature refrigerant flowing through the refrigerant circuit. Therefore, the refrigerant flowing through the water heat exchanger 12 transfers less heat than in the defrosting operation in which water does not flow through the water circuit.

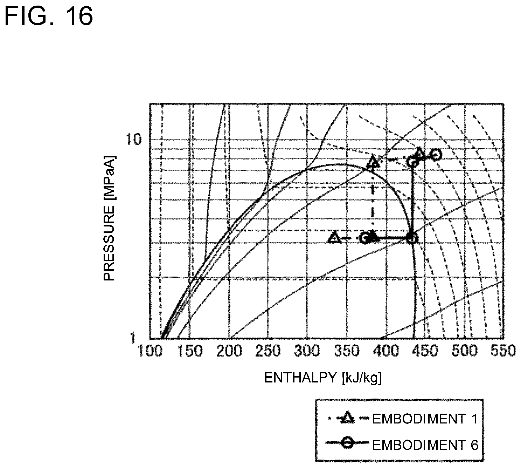

Fig. 16 is a graph showing an example of a refrigeration cycle upon start of the defrosting operation. In Fig. 16, broken lines are isotherms and solid lines are isopycnic lines. In Fig. 16, a thick solid line represents a refrigerant state in Embodiment 6, and a thick alternate long and short dashed line represents the refrigerant state in Embodiment 1.

As illustrated in Fig. 16, since the medium temperature water is caused to flow into the water heat exchanger 12 upon start of the defrosting operation in Embodiment 6, the refrigerant in the water heat exchanger 12 transfers less heat than in Embodiment 1. Consequently, the quality of the refrigerant to be sucked into the compressor 11 is higher than that in Embodiment 1, leading to a reduction in refrigerant circulation rate. This results in a reduction in sound of the refrigerant passing through the pressure reducing device 13.

As described above, in the hot water supply apparatus 500 according to Embodiment 6, the medium temperature water stored in the hot water storage tank 521 is caused to flow into the water heat exchanger 12 upon start of the defrosting operation. This reduces heat transfer from the refrigerant in the water heat exchanger 12, leading to a reduction in refrigerant circulation rate. This results in a reduction in sound of the refrigerant passing through the pressure reducing device 13. Furthermore, a reduction in heat transfer in the water heat exchanger 12 results in a reduction in input power of the compressor 11 in the defrosting operation, thus reducing the power consumption of the entire hot water supply apparatus 500.

Although Embodiments 1 to 6 of the present invention have been described above, the present invention is defined and limited by the claims. It will be appreciated that various modifications and applications are possible without departing from the spirit and scope of the present invention as far as they are covered by the claims.

For example, in Embodiments 1 to 6, controlling either one of the operating frequency of the compressor 11 and the opening degree of the pressure reducing device 13 has been described as an example of control. The control is not limited to this example. For example, both the operating frequency of the compressor 11 and the opening degree of the pressure reducing device 13 may be controlled. Consequently, the sound of the refrigerant passing through the pressure reducing device 13 can be reduced more finely.

Reference Signs List

1, 100, 200, 300, 400, 500 hot water supply apparatus 10, 110, 210, 310, 410 heat pump unit 11 compressor 12 water heat exchanger 13 pressure reducing device 14 air heat exchanger 15 fan 16 current sensor 17 discharge temperature sensor 18 high-pressure-side pressure sensor 20, 520 tank unit 21, 521 hot water storage tank 22 water pump 23 flow switching valve 23a first inlet port 23b second inlet port 23c outlet port 30, 130, 230, 330, 430, 530 controller 31 operation state determination unit 32 compressor control unit 33 pressure reducing device control unit 131 compressor input power calculation unit 132 compressor input power determination unit 133, 236, 433 storage unit 231 refrigerant state estimation unit 232 suction state estimation unit 233 circulation rate calculation unit 234 refrigerant flow speed calculation unit 235 operating frequency determination unit 331 refrigerant state determination unit 431 refrigerant density estimation unit 432 refrigerant density determination unit 521a unheated water outlet 521b heated water inlet 521c medium temperature water outlet 531 switching valve control unit

**Claims**

1.  A hot water supply apparatus (1, 100, 200, 300, 400, 500) comprising:

    a heat pump unit (10, 110, 210, 310, 410) including a compressor (11), a water heat exchanger (12), a pressure reducing device (13), and an air heat exchanger (14), the heat pump unit (10, 110, 210, 310, 410) being configured to heat water flowing through the water heat exchanger (12);
    a tank unit (20, 520) including a hot water storage tank (21, 521), and a water pump (22) supplying water leaving the hot water storage tank (21, 521) to the water heat exchanger (12);
    a compressor input power determination unit (132) configured to compare a compressor input power of the compressor (11) with a set threshold;
    a compressor control unit (32) configured to control an operating frequency of the compressor (11);
    and comprising:

    a pressure reducing device control unit (33) configured to control an opening degree of the pressure reducing device (13);
    a discharge temperature sensor (17) configured to detect a discharge temperature of the refrigerant discharged from the compressor (11);
    **characterized by** further comprising:

    a suction state estimation unit (232) configured to estimate, based on the discharge temperature detected by the discharge temperature sensor (17), a suction state of the refrigerant to be sucked into the compressor (11);
    a circulation rate calculation unit (233) configured to calculate a refrigerant circulation rate of the refrigerant from the estimated suction state; and
    an operating frequency determination unit (235) configured to determine, based on the calculated refrigerant circulation rate, the operating frequency of the compressor (11),
    and in that, the compressor control unit (32) is configured to, upon start of a defrosting operation in which the pressure reducing device (13) is opened, supply of the water to the water heat exchanger (12) is stopped, and refrigerant discharged from the compressor (11) is caused to flow into the air heat exchanger (14), the refrigerant is maintained at a high temperature accordingly, in a case where the compressor input power exceeds the set threshold, set an operating frequency of the compressor (11) to the operating frequency determined by the operating frequency determination unit (235), and to reduce the operating frequency of the compressor (11) thereby reducing flow speed of the refrigerant flowing into the pressure reducing device (13).

2.  The hot water supply apparatus (1, 100, 200, 300, 400, 500) of claim 1, further comprising:

    a current sensor (16) configured to detect a value of a current through the compressor (11); and
    a compressor input power calculation unit (131) configured to calculate the compressor input power from the value of the current through the compressor (11) detected by the current sensor (16) and a voltage applied to the compressor (11).

3.  The hot water supply apparatus (1, 100, 200, 300, 400, 500) of claim 1 or 2, further comprising:

a high-pressure-side pressure sensor (18) configured to detect a high-pressure-side pressure,
wherein the suction state estimation unit (232) estimates the suction state based on the high-pressure-side pressure detected by the high-pressure-side pressure sensor (18) and the discharge temperature detected by the discharge temperature sensor (17).

4. The hot water supply apparatus (1, 100, 200, 300, 400, 500) of any one of claims 1 to 3, wherein

the hot water storage tank (521) has a heated water inlet (521b) through which heated water heated by the water heat exchanger (12) flows into the tank, an unheated water outlet (521a) through which unheated water flows out of the tank, and a medium temperature water outlet (521c) through which medium temperature water having a medium temperature between a temperature of the heated water and that of the unheated water flows out of the tank, and
the tank unit (520) further includes
a flow switching valve (23) having a first inlet port (23a) connected to the unheated water outlet (521a), a second inlet port (23b) connected to the medium temperature water outlet (521c), and an outlet port (23c) connected to an inlet side of the water heat exchanger (12), the flow switching valve (23) being configured to switch between passages such that either one of the first inlet port (23a) and the second inlet port (23b) is in communication with the outlet port (23c); and
the hot water supply apparatus (1, 100, 200, 300, 400, 500) further comprises
a switching valve control unit (531) configured to cause, upon start of the defrosting operation, the flow switching valve (23) to switch between the passages such that the second inlet port (23b) is in communication with the outlet port (23c).

5. The hot water supply apparatus (1, 100, 200, 300, 400, 500) of claim 4, wherein

the heated water inlet (521b) is located in upper part of the hot water storage tank (521),
the unheated water outlet (521a) is located in lower part of the hot water storage tank (521), and
the medium temperature water outlet (521c) is located in middle part of the hot water storage tank (521).

6. The hot water supply apparatus (1, 100, 200, 300, 400, 500) of any one of claims 1 to 7, wherein the compressor (11), the water heat exchanger (12), the pressure reducing device (13), the air heat exchanger (14), and the compressor (11) are connected in circuit by refrigerant pipes to form a refrigerant circuit.

**Patentansprüche**

1. Warmwasserversorgungsvorrichtung (1, 100, 200, 300, 400, 500), aufweisend:

eine Wärmepumpeneinheit (10, 110, 210, 310, 410), die einen Verdichter (11), einen Wasserwärmetauscher (12), eine Druckminderungseinrichtung (13) und einen Luftwärmetauscher (14) aufweist, wobei die Wärmepumpeneinheit (10, 110, 210, 310, 410) eingerichtet ist, Wasser, das durch den Wasserwärmetauscher (12) strömt, zu erwärmen;
eine Tankeinheit (20, 520), aufweisend einen Warmwasserspeichertank (21, 521) und eine Wasserpumpe (22), die aus dem Warmwasserspeichertank (21, 521) austretendes Wasser dem Wasserwärmetauscher (12) zuführt;
eine Verdichtereingangsleistung-Bestimmungseinheit (132), die eingerichtet ist, eine Verdichtereingangsleistung des Verdichters (11) mit einem eingestellten Schwellenwert zu vergleichen;
eine Verdichter-Steuereinheit (32), die eingerichtet ist, eine Betriebsfrequenz des Verdichters (11) zu steuern; und aufweisend:

eine Druckminderungseinrichtung-Steuereinheit (33), die eingerichtet ist, einen Öffnungsgrad der Druckminderungseinrichtung (13) zu steuern;
einen Abgabetemperatursensor (17), der eingerichtet ist, eine Abgabetemperatur von aus dem Verdichter (11) abgegebenem Kältemittel zu erfassen;
**dadurch gekennzeichnet**, ferner aufzuweisen:

eine Ansaugzustand-Schätzeinheit (232), die eingerichtet ist, auf der Grundlage der von dem Abgabetemperatursensor (17) erfassten Abgabetemperatur einen Ansaugzustand des in den Verdichter (11) anzusaugenden Kältemittels zu schätzen;

eine Zirkulationsrate-Berechnungseinheit (233), die eingerichtet ist, eine Kältemittelzirkulationsrate des Kältemittels aus dem geschätzten Ansaugzustand zu berechnen; und

eine Betriebsfrequenz-Bestimmungseinheit (235), die eingerichtet ist, auf der Grundlage der berechneten Kältemittelzirkulationsrate die Betriebsfrequenz des Verdichters (11) zu bestimmen,

und dass die Verdichter-Steuereinheit (32) eingerichtet ist, beim Start eines Entfrostungsbetriebs, bei dem die Druckminderungseinrichtung (13) geöffnet wird, die Zufuhr des Wassers zu dem Wasserwärmetauscher (12) zu stoppen, und aus dem Verdichter (11) abgegebenes Kältemittel veranlasst wird, in den Luftwärmetauscher (14) zu strömen, das Kältemittel entsprechend auf einer hohen Temperatur gehalten wird, in einem Fall, in dem die Verdichter-Eingangsleistung den eingestellten Schwellenwert überschreitet, eine Betriebsfrequenz des Verdichters (11) auf die von der Betriebsfrequenz-Bestimmungseinheit (235) bestimmte Betriebsfrequenz einzustellen, und die Betriebsfrequenz des Verdichters (11) zu verringern und dadurch die Strömungsgeschwindigkeit des in die Druckreduziereinrichtung (13) strömenden Kältemittels zu reduzieren.

2.  Warmwasserversorgungsvorrichtung (1, 100, 200, 300, 400, 500) nach Anspruch 1, ferner aufweisend:

einen Stromsensor (16), der eingerichtet ist, einen Wert eines durch den Verdichter (11) fließenden Stroms zu erfassen; und

eine Verdichtereingangsleistung-Berechnungseinheit (131), die eingerichtet ist, die Verdichtereingangsleistung aus dem Wert des durch den Verdichter (11) fließenden Stroms, der von dem Stromsensor (16) erfasst wird, und einer an den Verdichter (11) angelegten Spannung zu berechnen.

3.  Warmwasserversorgungsvorrichtung (1, 100, 200, 300, 400, 500) nach Anspruch 1 oder 2, ferner aufweisend:

einen hochdruckseitigen Drucksensor (18), der eingerichtet ist, einen hochdruckseitigen Druck zu erfassen, wobei die Ansaugzustand-Schätzeinheit (232) den Ansaugzustand auf der Grundlage des von dem hochdruckseitigen Drucksensor (18) erfassten hochdruckseitigen Drucks und der von dem Abgabetemperatursensor (17) erfassten Abgabetemperatur schätzt.

4.  Warmwasserversorgungsvorrichtung (1, 100, 200, 300, 400, 500) nach einem der Ansprüche 1 bis 3, wobei

der Warmwasserspeichertank (521) einen Erwärmtes-Wasser-Einlass (521b), durch den erwärmtes Wasser, das von dem Wasserwärmetauscher (12) erwärmt wurde, in den Tank fließt, einen Nicht-Erwärmtes-Wasser-Auslass (521a), durch den nicht erwärmtes Wasser aus dem Tank fließt, und einen Mittlere-Temperatur-Wasser-Auslass (521c), durch den Wasser mit mittlerer Temperatur, das eine mittlere Temperatur zwischen einer Temperatur des erwärmten Wassers und der des nicht erwärmten Wassers hat, aus dem Tank fließt, aufweist, und die Tankeinheit (520) ferner aufweist:

ein Strömungsumschaltventil (23), aufweisend eine ersten Einlassöffnung (23a), die mit dem Nicht-Erwärmtes-Wasser-Auslass (521a) verbunden ist, eine zweite Einlassöffnung (23b), die mit dem Mittlere-Temperatur-Wasser-Auslass (521c) verbunden ist, und eine Auslassöffnung (23c), die mit einer Einlassseite des Wasserwärmetauschers (12) verbunden ist, wobei das Strömungsumschaltventil (23) eingerichtet ist, zwischen Durchlässen umzuschalten, so dass eine von der ersten Einlassöffnung (23a) und der zweiten Auslassöffnung (23c) mit der Auslassöffnung (23c) in Kommunikation ist; und

die Warmwasserversorgungsvorrichtung (1, 100, 200, 300, 400, 500) ferner aufweist:

eine Umschaltventil-Steuereinheit (531), die eingerichtet ist, beim Start des Entfrostungsbetriebs das Strömungsumschaltventil (23) zu veranlassen, zwischen den Durchlässen umzuschalten, so dass die zweite Einlassöffnung (23b) mit der Auslassöffnung (23c) in Kommunikation ist.

5.  Warmwasserversorgungsvorrichtung (1, 100, 200, 300, 400, 500) nach Anspruch 4, wobei

der Erwärmtes-Wasser-Einlass (521b) im oberen Teil des Warmwasserspeichertanks (521) angeordnet ist, der Nicht-Erwärmtes-Wasser-Auslass (521a) in dem unteren Teil des Warmwasserspeichertanks (521) angeordnet ist, und

der Mittlere-Temperatur-Wasser-Auslass (521c) im mittleren Teil des Warmwasserspeichertanks (521) angeordnet ist.

**6.** Warmwasserversorgungsvorrichtung (1, 100, 200, 300, 400, 500) nach einem der Ansprüche 1 bis 7, wobei der Verdichter (11), der Wasserwärmetauscher (12), die Druckminderungseinrichtung (13), der Luftwärmetauscher (14) und der Verdichter (11) durch Kältemittelleitungen verbunden sind, um einen Kältemittelkreislauf zu bilden.

**Revendications**

**1.** Appareil d'alimentation en eau chaude (1, 100, 200, 300, 400, 500) comprenant :

une unité de pompe à chaleur (10, 110, 210, 310, 410) comprenant un compresseur (11), un échangeur de chaleur à eau (12), un dispositif de réduction de pression (13) et un échangeur de chaleur à air (14), l'unité de pompe à chaleur (10, 110, 210, 310, 410) étant configurée pour chauffer l'eau circulant dans l'échangeur de chaleur à eau (12) ;
une unité de réservoir (20, 520) comprenant un réservoir de stockage d'eau chaude (21, 521), et une pompe à eau (22) alimentant l'échangeur de chaleur à eau (12) en eau sortant du réservoir de stockage d'eau chaude (21, 521) ;
une unité de détermination de puissance d'entrée de compresseur (132) configurée pour comparer une puissance d'entrée du compresseur (11) à un seuil défini ;
une unité de commande de compresseur (32) configurée pour commander une fréquence de fonctionnement du compresseur (11) ;
et comprenant :

une unité de commande de dispositif de réduction de pression (33) configurée pour commander un degré d'ouverture du dispositif de réduction de pression (13) ;
un capteur de température d'évacuation (17) configuré pour détecter une température d'évacuation du fluide frigorigène évacué du compresseur (11) ;
**caractérisé en ce qu'**il comprend en outre :

une unité d'estimation d'état d'aspiration (232) configurée pour estimer, sur la base de la température d'évacuation détectée par le capteur de température d'évacuation (17), un état d'aspiration du fluide frigorigène à aspirer dans le compresseur (11) ;
une unité de calcul de taux de circulation (233) configurée pour calculer un taux de circulation de fluide frigorigène à partir de l'état d'aspiration estimé ; et
une unité de détermination de fréquence de fonctionnement (235) configurée pour déterminer, sur la base du taux de circulation de fluide frigorigène, la fréquence de fonctionnement du compresseur (11), et **en ce que** l'unité de commande de compresseur (32) est configurée pour, lors du démarrage d'une opération de dégivrage dans laquelle le dispositif de réduction de pression (13) est ouvert, arrêter l'alimentation en eau de l'échangeur de chaleur à eau (12), et amener le fluide frigorigène évacué du compresseur (11) à circuler dans l'échangeur de chaleur à air (14), maintenir le fluide frigorigène à une température élevée en conséquence, dans un cas où la puissance d'entrée de compresseur dépasse le seuil défini, définir une fréquence de fonctionnement du compresseur (11) à la fréquence de fonctionnement déterminée par l'unité de détermination de fréquence de fonctionnement (235), et réduire la fréquence de fonctionnement du compresseur (11) réduisant ainsi la vitesse d'écoulement du fluide frigorigène circulant dans le dispositif de réduction de pression (13).

**2.** Appareil d'alimentation en eau chaude (1, 100, 200, 300, 400, 500) selon la revendication 1, comprenant en outre :

un capteur de courant (16) configuré pour détecter une valeur de courant à travers le compresseur (11) ; et
une unité de calcul de la puissance d'entrée de compresseur (131) configurée pour calculer la puissance d'entrée de compresseur à partir de la valeur du courant traversant le compresseur (11) détectée par le capteur de courant (16) et d'une tension appliquée au compresseur (11).

**3.** Appareil d'alimentation en eau chaude (1, 100, 200, 300, 400, 500) selon la revendication 1 ou 2, comprenant en outre :

un capteur de pression côté haute pression (18) configuré pour détecter une pression côté haute pression, dans lequel l'unité d'estimation d'état d'aspiration (232) estime l'état d'aspiration en fonction de la pression côté haute pression détectée par le capteur de pression côté haute pression (18) et de la température d'évacuation détectée par le capteur de température d'évacuation (17).

4. Appareil d'alimentation en eau chaude (1, 100, 200, 300, 400, 500) selon l'une quelconque des revendications 1 à 3, dans lequel

le réservoir de stockage d'eau chaude (521) comporte une entrée d'eau chauffée (521b) à travers laquelle l'eau chauffée par l'échangeur de chaleur à eau (12) s'écoule dans le réservoir, une sortie d'eau non chauffée (521a) à travers laquelle l'eau non chauffée s'écoule du réservoir, et une sortie d'eau à température moyenne (521c) à travers laquelle l'eau à température moyenne présentant une température moyenne se situant entre une température de l'eau chauffée et celle de l'eau non chauffée s'écoule du réservoir, et
l'unité de réservoir (520) comprend en outre
une vanne de commutation d'écoulement (23) ayant un premier orifice d'entrée (23a) relié à la sortie d'eau non chauffée (521a), un second orifice d'entrée (23b) relié à la sortie d'eau à température moyenne (521c), et un orifice de sortie (23c) relié à un côté entrée de l'échangeur de chaleur à eau (12), la vanne de commutation d'écoulement (23) étant configurée pour commuter entre les passages de sorte que l'un ou l'autre du premier orifice d'entrée (23a) et du second orifice d'entrée (23b) soit en communication avec l'orifice de sortie (23c) ; et
l'appareil d'alimentation en eau chaude (1, 100, 200, 300, 400, 500) comprend en outre
une unité de commande de vanne de commutation (531) configurée pour amener, au démarrage de l'opération de dégivrage, la vanne de commutation d'écoulement (23) à commuter entre les passages de sorte que le second orifice d'entrée (23b) soit en communication avec l'orifice de sortie (23c).

5. Appareil d'alimentation en eau chaude (1, 100, 200, 300, 400, 500) selon la revendication 4, dans lequel

l'entrée d'eau chauffée (521b) est située dans la partie supérieure du réservoir de stockage d'eau chaude (521),
la sortie d'eau non chauffée (521a) est située dans la partie inférieure du réservoir de stockage d'eau chaude (521), et
la sortie d'eau à température moyenne (521c) est située dans la partie centrale du réservoir de stockage d'eau chaude (521).

6. Appareil d'alimentation en eau chaude (1, 100, 200, 300, 400, 500) selon l'une quelconque des revendications 1 à 7, dans lequel le compresseur (11), l'échangeur de chaleur à eau (12), le dispositif de réduction de pression (13), l'échangeur de chaleur à air (14) et le compresseur (11) sont reliés en circuit par des tuyaux de fluide frigorigène pour former un circuit de fluide frigorigène.

FIG. 1

FIG. 2

FIG. 3

PRESSURE [MPaA] vs ENTHALPY [kJ/kg]

"FULLY OPENED" OPENING DEGREE OF PRESSURE REDUCING DEVICE

"SMALL" OPENING DEGREE OF PRESSURE REDUCING DEVICE

# FIG. 4

CITY WATER

# FIG. 5

OPERATION
INFORMATION

OPERATION
STATE DE-
TERMINATION
UNIT

STORAGE
UNIT

CURRENT
SENSOR

COMPRESSOR
INPUT POWER
CALCULATION
UNIT

COMPRESSOR
INPUT POWER
DETERMI-
NATION UNIT

COMPRESSOR
CONTROL
UNIT

CONTROL
SIGNAL

FIG. 6

FIG. 7

CITY WATER

FIG. 8

FIG. 9

CITY WATER

FIG. 10

FIG. 11

FIG. 12

FIG. 13

```
                    ┌─────────────┐
                    │    START    │
                    └──────┬──────┘
                           │
  ┌────────────────────────┤
  │                        │  S11
  │                   ◇─────────────◇        NO
  │                 ◇   DEFROSTING   ◇ ───────────────────┐
  │                 ◇   OPERATION?   ◇                     │
  │                   ◇─────────────◇                      │
  │                        │ YES   S12                     │
  │                   ┌────────────┐                       │
  │                   │  ESTIMATE  │                       │
  │                   │ REFRIGERANT│                       │
  │                   │  DENSITY   │                       │
  │                   └─────┬──────┘                       │
  │                         │         S13                  │
  │                   ◇─────────────◇        NO            │
  │                 ◇  REFRIGERANT  ◇ ──────────┐          │
  │                 ◇   DENSITY <   ◇           │          │
  │                 ◇  THRESHOLD?   ◇           │          │
  │                   ◇─────────────◇           │          │
  │                        │ YES  S14           │   S15    │
  │                   ┌──────────┐      ┌──────────┐       │
  │                   │  REDUCE  │      │ INCREASE │       │
  │                   │ OPENING  │      │ OPENING  │       │
  │                   │  DEGREE  │      │  DEGREE  │       │
  │                   └────┬─────┘      └────┬─────┘       │
  └────────────────────────┘                │             │
                                             │             │
                                             │      ┌──────────┐
                                             │      │   END    │
                                             │      └──────────┘
```

FIG. 14

HIGH TEMPERATURE
WATER (HEATED WATER)

MEDIUM TEMPERATURE
WATER

LOW TEMPERATURE
WATER (UNHEATED WATER)

CITY WATER

FIG. 15

OPERATION
INFORMATION

OPERATION
STATE DE-
TERMINATION
UNIT

SWITCHING
VALVE
CONTROL
UNIT

CONTROL
SIGNAL

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003240342 A
- JP 2005188863 A

- DE 102007056461 A1